# EUROPÄISCHE PATENTSCHRIFT

(11) **EP 2 755 790 B1**
(45) Veröffentlichungstag und Bekanntmachung des Hinweises auf die Patenterteilung: **16.05.2018**
(21) Anmeldenummer: 12758493.6
(22) Anmeldetag: 13.09.2012
(51) Int. Cl.: B24B 33/06, B23F 19/05, B24B 49/10, B23F 23/00, B23F 23/12

(54) **HONVERFAHREN MIT EINMITTUNG EINES WERKSTÜCKS AN EINER WÄLZPRÜFSTATION**
HONING METHOD COMPRISING THE CENTRING OF A WORKPIECE AT A ROLLING TEST STATION
PROCÉDÉ DE RODAGE AVEC CENTRAGE D'UNE PIÈCE SUR UN POSTE DE VÉRIFICATION DE TAILLE PAR DÉVELOPPANTE

(30) Priorität: 16.09.2011 DE 102011082868
(43) Veröffentlichungstag der Anmeldung: 23.07.2014
(73) Patentinhaber: FELSOMAT GmbH & Co. KG, 75203 Königsbach-Stein (DE)
(72) Erfinder: JÄGER, Helmut, F., 8706 Meilen (CH)
(74) Vertreter: Kohler Schmid Möbus Patentanwälte
(86) Internationale Anmeldenummer: PCT/EP2012/067955
(87) Internationale Veröffentlichungsnummer: WO 2013/037890

(56) Entgegenhaltungen:
- DE-A1- 19 857 592
- DE-B3-102006 019 325
- DE-B4-102007 030 955
- US-A1- 2005 055 836
- US-A1- 2005 186 886

## Beschreibung

Die Erfindung betrifft ein Verfahren zur Honbearbeitung eines Werkstücks, insbesondere Zahnrads,
mit folgenden Schritten:
a) das Werkstück wird zunächst auf eine Zwischenhalterung verbracht,
b) das Werkstück wird von der Zwischenhalterung mit einer definierten Winkelposition an eine Werkstückspindel übergeben, und
c) das auf der Werkstückspindel gehaltene Werkstück wird mit einem Honwerkzeug auf einer Werkzeugspindel in Eingriff gebracht und einer Honbearbeitung unterzogen.

Ein solches Verfahren ist aus der DE 10 2007 030 955 B4 bekannt geworden.

Beim Honen werden bei einem verzahnten Werkstück, etwa einem Zahnrad oder einem Getriebe, die Zahnflanken auf einem Honwerkzeug abgewälzt; das Honwerkzeug ist in der Regel ein so genannter Honring, welcher meist aus einem keramischen Material besteht oder mit einem keramischen Material beschichtet ist. Dadurch wird Material von den Zahnflanken des Werkstücks abgetragen. Der Honring besitzt eine kreisringförmige Grundform und weist seinerseits radial nach innen gerichtete Zahnflanken auf.

Während des Abwälzens von Werkstück und Honring wird der Honring mittels einer Werkzeugspindel rotiert; ebenso wird das Werkstück mittels einer Werkstückspindel rotiert. Die Werkstückspindel rotiert dabei mit hohen Drehzahlen bis in die Größenordnung von einigen tausend U/min. Da beim Honen ein Übermaß von lediglich in der Größenordnung 15-50µm entfernt wird, müssen der Honring und das Werkstück bei der Honbearbeitung sehr genau zueinander ausgerichtet und synchronisiert sein.

Für die Steuerung des Honprozesses ist es wichtig, die Position der Zähne bzw. der Zahnflanken am Werkstück und am Honwerkzeug zu kennen, wenn das Werkstück in das Honwerkzeug eingefahren wird. Bei diesem Einfahren sind die Spindeln typischerweise bereits auf die für den Honprozess vorgesehenen Drehzahlen beschleunigt. Im Falle einer Fehlpassung, etwa wenn ein Zahn des Werkstücks nicht auf eine Lücke am Honwerkzeug, sondern auf einen Zahn des Honwerkzeugs treffen würde, würden das Werkstück und (was in der Regel noch teuer zu ersetzten ist) auch das Honwerkzeug stark beschädigt.

Im Stand der Technik sind typischerweise Drehgeber an der Werkstückspindel und an der Werkzeugspindel vorgesehen, mit denen nicht nur die Drehgeschwindigkeiten, sondern auch die absolute Positionen der Spindeln überwacht werden können. Nach einer einmaligen Kalibrierung nach Installation des Honwerkzeugs an der Werkzeugspindel kann die Position der Zahnflanken des Honwerkzeugs mittels des Drehgebers ermittelt und für die Steuerung eingesetzt werden. Bezüglich der Werkstückspindel ist grundsätzlich nach jedem Ergreifen eines neuen Werkstücks eine neue Kalibrierung notwendig; hierfür wird typischerweise ein induktiver Sensor an der Werkstückspindel eingesetzt, mit dem in seiner unmittelbaren Nähe vorbeistreichende Zähne erkannt werden können. Für diese Kalibrierung muss das Werkstück eine gewisse Zeit vor Beginn der Honbearbeitung in Sensornähe auf der Werkstückspindel rotiert werden.

Während einer solchen Kalibrierung der Werkstückspindel kann diese nicht für die Honbearbeitung eingesetzt werden, wodurch Nebenzeiten entstehen, die die Taktzeit an einer Honmaschine verlängern.

Für verschiedene Typen von Werkzeugmaschinen ist vorgeschlagen worden, ein Werkzeug durch den Einsatz von zwei Werkzeugspindeln, an denen abwechselnd das Werkzeug eingesetzt wird, besser auszulasten, vgl. beispielsweise DE 10 2006 019 325 B3. Dadurch können Nebenprozesse an einer Werkstückspindel wie ein Werkstückwechsel hauptzeitparallel, also während einer Bearbeitung an der anderen Werkstückspindel mit dem Werkzeug, erfolgen. Der Einsatz von zwei Werkstückspindeln vergrößert und verteuert jedoch die Werkzeugmaschine.

In der DE 10 2007 030 955 B4 wird vorgeschlagen, ein Werkstück zunächst mittels einer Indexierspindel in eine für eine nachfolgende Honbearbeitung geeignete Winkelposition zu drehen, und dann mittels eines schwenkbaren Trägers, an welchem zwei Greifer ausgebildet sind, an eine Werkstückspindel zu übergeben. Anschließend wird die Werkstückspindel an den Honring zugestellt. Um bei der Übergabe der Werkstücke an die Werkstückspindel eine definierte Winkelstellung sicherzustellen, werden die Werkstücke in besonderen Aufspannvorrichtungen gehalten, welche radial einwärts gerichtete, axiale Vorsprünge aufweisen.

Für das Spannen der Werkstücke auf den Aufspannvorrichtungen und das anschließende Lösen der Werkstücke müssen jedoch zusätzliche Prozesse eingerichtet werden. Die Indexierspindel, der schwenkbare Träger und die zwei Greifer stellen außerdem einen erheblichen apparativen Aufwand dar. Zudem ist die Nachverfolgung der genauen Winkelpositionen in diesem Verfahren insgesamt relativ komplex.

### Aufgabe der Erfindung

Der Erfindung liegt die Aufgabe zugrunde, ein Verfahren zur Honbearbeitung eines Werkstücks vorzustellen, bei dem die Kalibrierung (auch Einmitten oder Zentrieren genannt) der Werkstückspindel bezüglich eines gehaltenen Werkstücks einfach und zeitsparend erfolgen kann.

### Kurze Beschreibung der Erfindung

Diese Aufgabe wird gelöst durch ein Verfahren der eingangs genannten Art, das dadurch gekennzeichnet ist, dass nach Schritt a) das Werkstück auf der Zwischenhalterung mit einem Lehrrad auf einer Lehrradhalterung in Eingriff gebracht und an diesem abgewälzt wird, um das Werkstück zu vermessen und anhand des Ergebnisses der Vermessung des Werkstücks nach Schritt a) entschieden wird, ob das Werkstück für die Honbearbeitung in Schritt c) zugelassen oder aussortiert wird, wobei ein aussortiertes Werkstück von einem Greifer von der Zwischenhalterung direkt zurück zu einer Be- und Entladestation verbracht wird; und dass vor oder während Schritt b) eine Übergabe-Winkelposition des Werkstücks durch Auslesen eines Drehgebers der Lehrradhalterung bestimmt wird.

Im Rahmen der Erfindung wird das Kalibrieren (Einmitten, Zentrieren) der Werkstückspindel in eine Wälzprüfung integriert, während der das Werkstück an einem Lehrrad (auch Meisterrad genannt) abgewälzt wird. Mit der Wälzprüfung werden üblicherweise Werkstücke, deren Aufmaß für die Honbearbeitung zu groß ist, identifiziert.

Das Lehrrad ist typischerweise als ein möglichst fehlerfreies, in der Regel geschliffenes Werkstück, welches vom selben Typus wie das zu vermessende Werkstück ist, gewählt (alternativ kann das Lehrrad auch von abweichendem Typus, etwa mit anderer Zähnezahl als das Werkstück, sein). Das Lehrrad greift beim Abwälzen in das Zahnprofil des zu prüfenden Werkstücks ein, wodurch eine genau definierte Winkelbeziehung eintritt; in der Regel ist die Winkelbeziehung ein Versatz um einen halben Mittenabstands zweier benachbarter Zähne.

Die (absolute) Winkelposition des Werkstücks auf der Zwischenhalterung kann dann aus der ausgelesenen (absoluten) Winkelposition der Lehrradhalterung (einen schlupffreien Eingriff von Lehrrad und Werkstück voraussetzend) mittels des Drehgebers der Lehrradhalterung nach einer Kalibrierung der Lehrradhalterung ermittelt werden; eine erneute Kalibrierung ist grundsätzlich nur nach Tausch des Lehrrads (etwa im Falle einer Umrüstung auf einen anderen Werkstücktypus) erforderlich.

Die Kalibrierung der Lehrradhalterung kann dabei zweistufig sein (d.h. aus der Winkelposition der Lehrradhalterung wird zunächst auf die Winkelposition des fest montierten Lehrrads geschlossen, und aus der Winkelposition des Lehrrads wird dann über die Werkstückgeometrie auf die Winkelposition des in Eingriff stehenden Werkstücks geschlossen), oder aber einstufig sein (aus der Winkelposition der Lehrradhalterung wird direkt auf die Winkelposition des in Eingriff stehenden Werkstücks geschlossen).

Man beachte, dass nach erfolgter Kalibrierung von Lehrradhalterung und Lehrrad die Winkelposition der Lehrradhalterung (die im Wesentlichen eine Welle als rotierendes Bauteil umfasst) typischerweise ohne explizite Erwähnung der Kalibrierung der Einfachheit halber als eine Winkelposition des Lehrrads ausgedrückt wird.

Bei der Übergabe des Werkstücks von der Zwischenhalterung an die Werkstückspindel wird dann erfindungsgemäß die Winkelposition (bevorzugt) gar nicht oder lediglich in definierter, bekannter Weise verändert, so dass die Winkelposition der Zahnflanken des Werkstücks auf der Werkstückspindel nach der Übergabe (bevorzugt) bekannt oder leicht berechenbar ist.

Durch die Bestimmung der Übergabe-Winkelpostion des Werkstücks mit dem Drehgeber der Lehrradhalterung am Ende der Wälzprüfung kann das Einmitten oder Zentrieren des Werkstücks in der Prüfstation hauptzeitparallel erfolgen (also während am Honwerkzeug ein anderes Werkstück bearbeitet wird), so dass die Taktzeit der Honmaschine im Vergleich zu einem separaten Einmitten auf der Werkstückspindel mit einem Sensor (etwa einem Induktivitätssensor) verkürzt wird. Ein Einmitten oder Zentrieren des Werkstücks auf der Werkstückspindel mit einem Sensor (etwa einem Induktivitätssensor), was die eigentliche Honbearbeitung verzögern würde, ist im Rahmen der Erfindung nicht erforderlich.

Man beachte, dass die Werkstückspindel und die Werkzeugspindel für die Verfolgung der Winkelpositionen während der weiteren Rotationen der Spindeln, insbesondere während der Honbearbeitung, jeweils Drehgeber aufweisen. Deren Signale (bzw. Informationen) werden von einer elektronischen Steuereinrichtung ausgewertet und für die korrekte Synchronisation der Spindeln bei der Honbearbeitung ausgewertet.

Lehrrad (bzw. Lehrradhalterung) und Werkstück (bzw. Zwischenhalterung) sind parallel zueinander ausgerichtet. Zur Vermessung des Werkstücks ist typischerweise die Lehrradhalterung (alternativ die Zwischenhalterung) in einer radialen Richtung beweglich gelagert, wobei die Verfahrposition der Lehrradhalterung während der Abwälzbewegung mitverfolgt wird; dadurch kann der Achsabstand bzw. das Aufmaß des Werkstücks bestimmt werden. Das Lehrrad liegt beim Abwälzen bevorzugt mit zwei Zahnflanken am jeweiligen Zahn des Werkstücks an (Zweiflankenwälzprüfung, bei schlupffreiem gegenseitigem Eingriff), wodurch ein besonders genaues Einmitten erfolgen kann.

### Bevorzugte Varianten der Erfindung

Bei einer besonders vorteilhaften Variante des erfindungsgemäßen Verfahrens wird die Winkelposition der Lehrradhalterung mit dem Drehgeber ausgelesen, während das Lehrrad noch im Eingriff mit dem Werkstück ist, aber das Werkstück im Rahmen der Übergabe bereits drehfest ergriffen worden ist. Dadurch ist ausgeschlossen, das eine Winkelpositionsveränderung des Werkstücks, die durch einen Zugriff auf das Werkstück (etwa durch die Werkstückspindel selbst im Pick-Up-Verfahren) aufgeprägt wurde, die Einmittung verfälscht. Alternativ ist es auch möglich, dass vor der Übergabe in Schritt b) das Lehrrad und das Werkstück außer Eingriff gebracht werden, etwa um die Übergabe nicht zu behindern. In diesem Fall muss das Verfahren so geführt werden, dass es zu keiner undefinierten Winkelpositionsänderung des Werkstücks während der Übergabe kommen kann. Hierfür können beispielsweise Zwischenfixierungen des Werkstücks vorgenommen werden. Besonders bevorzugt ist eine Verfahrensvariante, bei der in Schritt b) die Übergabe von der Zwischenhalterung direkt an die Werkstückspindel erfolgt, insbesondere wobei die Werkstückspindel bei der Übergabe motorisch verfahren wird. Dieses Vorgehen wird auch als "Pick up"-Verfahren bezeichnet; es ist besonders schnell und Winkelpositionsfehler durch Zwischenübergaben sind ausgeschlossen. Alternativ kann auch eine indirekte Übergabe erfolgen, beispielsweise mit einem zwischengeschalteten Greifer, der das Werkstück von der Zwischenhalterung aufnimmt und an die Werkstückspindel weiterreicht; hierbei muss die Information über die Winkelposition des Werkstücks erhalten bleiben. Das Merkmal, dass anhand des Ergebnisses der Vermessung des Werkstücks nach Schritt a) entschieden wird, ob das Werkstück für die Honbearbeitung in Schritt c) zugelassen oder aussortiert wird, führt dazu, dass eine überflüssige Bearbeitung von schlechten Werkstücken verhindert wird. Als Entscheidungskriterium kann insbesondere dienen, ob das maximale Aufmaß des Werkstücks einen Grenzwert (etwa 50 µm) überschreitet.

Bei einer besonders bevorzugten Variante des erfindungsgemäßen Verfahrens werden im Rahmen der Vermessung des Werkstücks winkelabhängige Maßinformationen über das Werkstück bestimmt, wobei beim Abwälzen mittels des Drehgebers der Lehrradhalterung die Winkelposition des Werkstücks mitverfolgt wird. Insbesondere kann das Aufmaß (entsprechend dem Achsabstand) als Funktion des Winkels (in einer Ebene senkrecht zur Werkstückdrehachse, bezüglich einer beliebig wählbaren Nullwinkel-Richtung) festgehalten werden. Die Winkelauflösung sollte dabei wenigstens der Anzahl der Zähne, und bevorzugt wenigstens der Anzahl der Zahnflanken (pro Zahn zwei Flanken) entsprechen. Dadurch können Besonderheiten (Fehler) des Werkstücks für eine spätere besondere Bearbeitung (insbesondere für eine besondere, anschließenden Honbearbeitung) identifiziert werden. Es können weiterhin auch Summenteilung und Rundheit winkelabhängig ermittelt werden.

Ebenfalls besonders bevorzugt ist eine Weiterentwicklung der oben genannten Variante, die vorsieht, dass die winkelabhängigen Maßinformationen an eine elektronische Steuereinrichtung, die in Schritt c) die Honbearbeitung steuert, übergeben werden,
und dass die elektronische Steuereinrichtung die winkelabhängigen Maßinformationen für die Steuerung der Honbearbeitung des Werkstücks in Schritt c) auswertet. Dadurch kann die Honbearbeitung auf die Besonderheiten des einzelnen Werkstücks abgestimmt werden.

Vorteilhafter Weise werden dabei in Schritt c) der relative Achsabstand und/oder die relative Drehposition des Werkstücks an der Werkstückspindel und des Honwerkzeugs an der Werkzeugspindel während eines Umlaufs des Werkstücks in Abhängigkeit von den winkelabhängigen Maßinformationen mittels der elektronischen Steuereinrichtung nachgeführt. Dadurch können über den Umfang des Werkstücks variierende Fehler oder Abmessungen des Werkstücks, insbesondere eine leicht unrunde Form, gezielt korrigiert oder verändert werden. Beispielsweise kann der Achsabstand von Werkzeugspindel und Werkstückspindel immer dann, wenn ein Winkelbereich des Werkstücks mit besonders hohem Aufmaß in den Kontaktbereich mit dem Honwerkzeug einschwenkt, verringert werden, um zunächst dieses besonders hohe Aufmaß soweit abzutragen, dass es dem Aufmaß in den übrigen Winkelbereichen des Werkstücks entspricht; anschließend wird die Honbearbeitung auf den gesamten Winkelbereich (d.h. auf den gesamten Umfang) des Werkstücks ausgedehnt. Die elektronische Steuereinrichtung verändert im Rahmen dieser Variante den Achsabstand und/oder die Drehposition des Werkstücks und des Honwerkzeugs typischerweise periodisch mit der Umlauffrequenz des Werkstücks.

Bevorzugt ist weiterhin eine Verfahrensvariante, bei der das Werkstück auf der Zwischenhalterung frei drehbar gehalten ist, und das Lehrrad beim Abwälzen für die Vermessung des Werkstücks motorisch angetrieben wird. Dieses Vorgehen hat sich in der Praxis bewährt. Es ist alternativ auch möglich, das Werkstück auf der Zwischenhalterung motorisch anzutreiben.

Ebenfalls bevorzugt ist eine Verfahrensvariante, die vorsieht, dass die Schritte a) bis c) an verschiedenen Werkstücken wiederholt werden, und dass zumindest bei einem Teil der Werkstücke nach der Honbearbeitung d) das Werkstück zurück auf die Zwischenhalterung verbracht wird, erneut mit dem Lehrrad in Eingriff gebracht und an diesem abgewälzt wird, um das Werkstück zu vermessen, und
e) in Abhängigkeit vom Ergebnis der Messung von Schritt d) entweder ein weiteres Werkstück gemäß den Schritten a) bis c) einer Honbearbeitung unterzogen wird, oder das Honwerkzeug ausgetauscht wird. Typischerweise erfolgt nach Installation eines neuen Honwerkzeugs zunächst eine Bearbeitung einer größeren Anzahl von Werkstücken (z.B. 200) ohne Kontrollmessung gemäß Schritt d), und anschließend erfolgt eine Kontrollmessung nach jeweils einer kleineren Anzahl von Werkstücken (z. B. 20), bis eine Kontrollmessung in Schritt d) eine kritische Bearbeitungsqualität ergibt; sodann wird das Honwerkzeug ausgetauscht. Mit dieser Variante kann eine gute Bearbeitungsqualität bei optimaler Ausnutzung der Standzeit des Honwerkzeugs sichergestellt werden.

In den Rahmen der vorliegenden Erfindung fällt auch eine Honmaschine, eingerichtet zur Durchführung eines oben beschriebenen, erfindungsgemäßen Verfahrens, umfassend
- eine Werkstückspindel für ein Werkstück, insbesondere ein Zahnrad,
- eine Werkzeugspindel für ein Honwerkzeug, insbesondere einen keramischen oder keramikbeschichteten Honring,
- und eine Prüfstation, an welcher eine Zwischenhalterung für das Werkstück und eine Lehrradhalterung für ein Lehrrad ausgebildet sind, wobei die Lehrradhalterung mit einem Drehgeber zur Bestimmung der Winkelposition der Lehrradhalterung ausgestattet ist,
- eine Be- und Entladestation für Werkstücke, und
- einen Greifer, der zwischen der Prüfstation und der Be- und Entladestation verfahrbar ist. Mit dem Drehgeber kann zu jedem beliebigen Zeitpunkt die (absolute) Winkelposition der Lehrradhalterung bzw. des Lehrrads bestimmt werden. Dadurch kann auf die Winkelposition eines Werkstücks im Eingriff mit dem Lehrrad geschlossen werden; diese Information kann zeitsparend zum Einmitten des Werkstücks auf der Werkstückspindel verwendet werden. Man beachte, dass zum Auslesezeitpunkt des Drehgebers der Eingriff nicht mehr zu bestehen braucht. Die Prüfstation ist gemäß der Erfindung von der Bearbeitungsstation (d.h. der Werkstückspindel und der Werkzeugspindel) separat.

Bei einer bevorzugten Ausführungsform der erfindungsgemäßen Honmaschine weist die Honmaschine eine elektronische Steuereinrichtung auf, die dazu ausgebildet ist, durch Auslesen des Drehgebers eine der ausgelesenen Winkelposition der Lehrradhalterung zugehörige Winkelposition des Werkstücks zu ermitteln und nach Übergabe des Werkstücks an die Werkstückspindel damit die Winkelposition des Werkstücks während der Honbearbeitung nachzuverfolgen. Die Werkstückspindel verfügt typischerweise über einen eigenen Drehgeber, um die Winkelposition des Werkstücks nachzuverfolgen; die Kalibrierung erfolgt indirekt über den Drehgeber der Lehrradhalterung. Ebenso verfügt die Werkzeugspindel typischerweise über einen eigenen Drehgeber, um die Winkelposition des Honwerkzeugs zu verfolgen; eine Kalibrierung ist nur nach einem Austausch des Honwerkzeugs erforderlich. Bei dieser Ausführungsform kann die Einmittung des Werkstücks im Rahmen der Wälzprüfung des Werkstücks zeitsparend hauptzeitparallel an der Prüfstation erfolgen.

Besonders bevorzugt ist eine Weiterbildung dieser Ausführungsform, bei der die elektronische Steuereinrichtung weiterhin dazu ausgebildet ist,
- aus den relativen Verschiebepositionen von Zwischenhalterung und Lehrradhalterung sowie der Winkelpositionen der Lehrradhalterung während eines Abwälzens des Werkstücks am Lehrrad winkelabhängige Maßinformationen über das Werkstück einzulesen, und
- bei der Honbearbeitung des Werkstücks den relativen Achsabstand und/oder die relative Drehposition des Werkstücks auf der Werkstückspindel und eines Honwerkzeug auf der Werkzeugspindel während eines Umlaufs des Werkstücks in Abhängigkeit von den winkelabhängigen Maßinformationen nachzuführen. Dadurch können über den Umfang des Werkstücks variierende Fehler oder Abmessungen des Werkstücks, insbesondere eine leicht unrunde Form, gezielt korrigiert oder verändert werden.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Aufsicht auf eine erfindungsgemäße Honmaschine, an der das erfindungsgemäße Verfahren zur Honbearbeitung ausgeführt werden kann;
- Fig. 2: einen schematischen Querschnitt durch die Prüfstation von Fig. 1 bei Ebene II in Fig. 1, bei nicht in ein Werkstück eingreifendem Lehrrad;
- Fig. 3: eine schematische Aufsicht auf die Prüfstationvon Fig. 1, bei in ein Werkstück eingreifendem Lehrrad;
- Fig. 4a: ein Beispiel für eine Messung des Achsabstands zwischen Lehrrad und Werkstück bei gegenseitigem Eingriff über eine Umdrehung des Lehrrads;
- Fig. 4b: ein Beispiel für einen anzusteuernden Achsabstand von Werkstückspindel und Honring, für das in Fig. 4a vermessene Werkstück;
- Fig. 5: ein schematischer Querschnitt durch die Werkzeugspindel von Fig. 1 bei Ebene V in Fig. 1, bei für die Honbearbeitung mit der Werkstückspindel zugestelltem Werkstück.

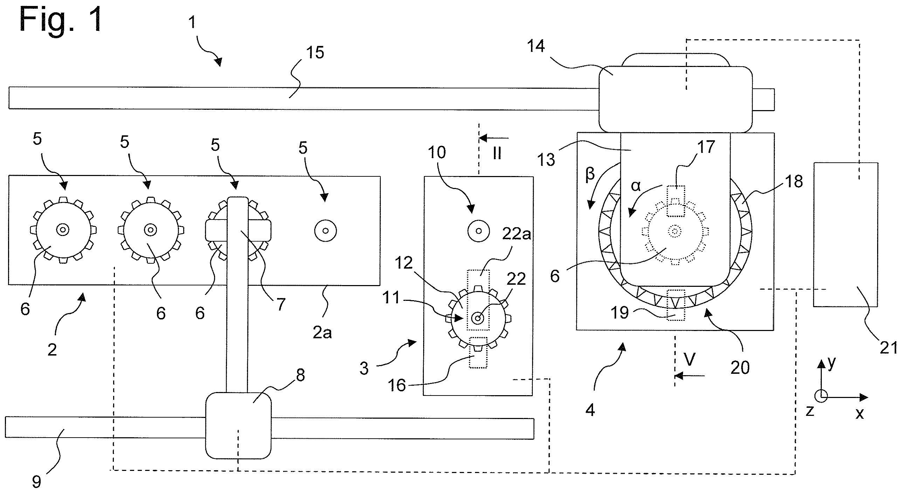

Die **Figur 1** zeigt eine Ausführungsform einer erfindungsgemäßen Honmaschine 1 in einer Übersicht. Die Honmaschine 1 umfasst hier eine Be- und Entladestation 2, eine Prüfstation 3 und eine Bearbeitungsstation 4.

An der Be- und Entladestation 2 sind in der gezeigten Ausführungsform in einem Gestell 2a vier Ablageplätze 5 für jeweils ein Werkstück 6 eingerichtet. Typischerweise wird ein Gestell 2a mit vier unbearbeiteten Werkstücken 6 bereitgestellt, und nach Abarbeitung aller Werkstücke 6 wird das Gestell 2a ausgetauscht. In der gezeigten Situation sind drei Werkstücke 6 im Gestell 2a, von denen eines gerade durch einen Greifer 7 ergriffen wird. Der Greifer 7 ist über einen Kreuzschlitten 8 und ein Portalsystem 9 vertikal (senkrecht zur Zeichenebene, z-Richtung) und horizontal (in x-Richtung) zwischen der Be- und Entladestation 2 und der Prüfstation 3 verfahrbar. Der Greifer 7 wird das ergriffene Werkstück 6 zur Prüfstation 3 verbringen.

Die Prüfstation 3 umfasst eine Zwischenhalterung 10 für ein Werkstück 6 (zu welchem der Greifer 7 das ergriffene Werkstück 6 verbringen wird) und eine Lehrradhalterung 11 für ein Lehrrad 12 (auch Meisterrad genannt). Das Lehrrad 12 kann horizontal auf die Zwischenhalterung 10 zu (in y-Richtung) verfahren werden, vgl. die sich in y-Richtung erstreckende Öffnung 22a für eine Welle 22 der Lehrradhalterung 11. Im Kontakt mit einem Werkstück 6 auf der Zwischenhalterung 10 kann die Position des Lehrrads 12 über einen Umlauf des Lehrrads 12 (was auch einem Umlauf des Werkstücks 6 entspricht) vermessen werden ("Wälzprüfung", siehe dazu unten). Dadurch kann auf die Qualität des Werkstücks 6 geschlossen werden. Das Lehrrad 12 entspricht vom Typus her dem Werkstück 6 nach vollständiger Honbearbeitung; es wird vorausgesetzt, dass das Lehrrad 12 keine nennenswerten Fehler aufweist.

Ein für die vorgesehene Honbearbeitung zu schlechtes Werkstück 6 (etwa wegen zu viel maximalem Aufmaß) wird vom Greifer 7 von der Prüfstation direkt zurück zur Be- und Entladestation 2 verbracht. Ein ausreichend gutes Werkstück 6 wird von einer Werkstückspindel 13 im Pick-Up-Verfahren ergriffen und zur Bearbeitungsstation 4 verbracht. Die Werkstückspindel 13 ist dafür vertikal (in z-Richtung) und horizontal (in x-Richtung und hier auch begrenzt in y-Richtung für die Werkstückzustellung in der Bearbeitungsstation 4) mit einem Doppel-Kreuzschlitten 14 und einem Portalsystem 15 zwischen allen Stationen 2, 3, 4 verfahrbar.

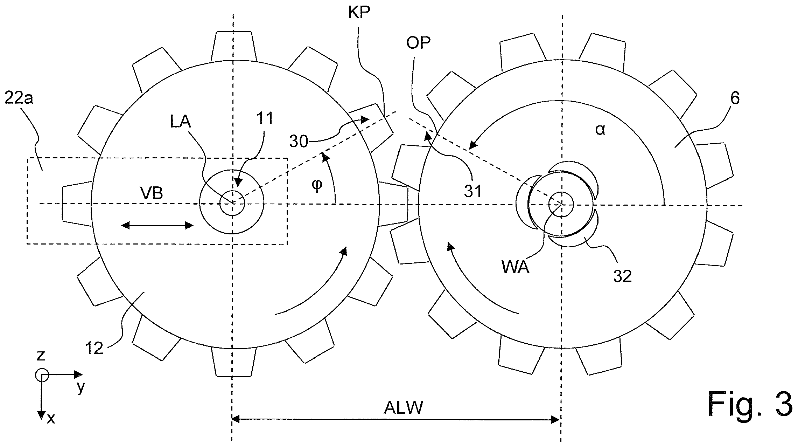

Die Lehrradhalterung 11 verfügt zudem erfindungsgemäß über einen Drehgeber 16, mit dem der absolute Drehwinkel (auch absolute Winkelposition genannt) der Lehrradhalterung 11 bzw. des Lehrrads 12 jederzeit feststellbar ist; eine Kalibrierung bezüglich des Lehrrads 12 erfolgt einmalig bei Installation des Lehrrads 12. Die Drehwinkelinformation wird dazu genutzt, ein Werkstück 6 auf der Zwischenhalterung 10 einzumitten (siehe dazu unten, insbesondere bei Fig. 3).

Ein von der Werkstückspindel 13 zur Bearbeitungsstation 4 verbrachtes Werkstück 6 (in Fig. 1 gepunktet dargestellt, da es von der Werkstückspindel 13 verdeckt wird) wird an der Bearbeitungsstation 4 einer Honbearbeitung unterzogen. Dazu wird das Werkstück 6 auf der Werkstückspindel 13 auf eine hohe Drehzahl beschleunigt. Dabei wird die absolute Winkelposition α des Werkstücks 6 mittels eines Drehgebers 17 verfolgt; hierfür wird die Einmittungs-Information der Prüfstation 3 genutzt. Ebenso wird ein Honwerkzeug 18, hier ein keramischer oder keramikbeschichteter Honring, in einer Werkzeugspindel 20 auf eine hohe Drehzahl beschleunigt. Auch hier wird die absolute Winkelposition β des Honwerkzeugs 18 mittels eines Drehgebers 19 verfolgt; eine Kalibrierung erfolgt einmalig bei Installation des Honrings.

Mit schnell drehender Werkstückspindel 13 und etwas langsamer drehender Werkzeugspindel 20 werden das Werkstück 6 und das Honwerkzeug 18 synchronisert miteinander in Eingriff gebracht; dazu wird die Werkstückspindel 13 auf das Honwerkzeug 18 zu verfahren (hier in negativer y-Richtung, in Fig. 1 nach unten). Die Verfahr-, Greif- und Drehmotoren von Werkstückspindel 13 und Werkzeugspindel 20 werden dabei von einer elektronischen Steuereinrichtung 21 kontrolliert, die auch alle Drehgeberinformationen ausliest; die elektronische Steuereinrichtung 21 kontrolliert darüber hinaus auch die Verfahr- , Greif- und Drehmotoren des Greifers 7 und der Prüfstation 3. Im Eingriff wird vom Werkstück 6 Material abgetragen, was die eigentliche Honbearbeitung darstellt.

Nach Abschluss der Honbearbeitung wird das Werkstück 6 von der Werkstückspindel 13 zu einem freien Ablageplatz 5 der Be- und Entladestation 2 verbracht. Alternativ kann auch ein bearbeitetes Werkstück 6 zur Zwischenhalterung 10 der Prüfstation 3 zurück gebracht werden, um den Bearbeitungserfolg im Rahmen einer erneuten Wälzprüfung zu überprüfen.

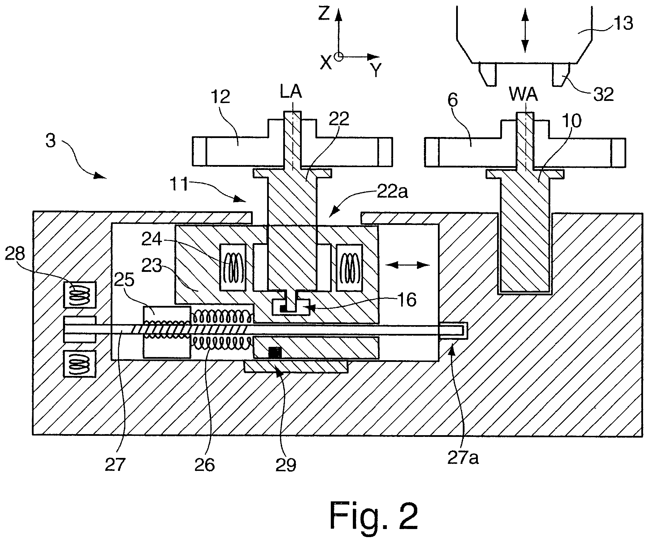

In **Figur 2** ist die Prüfstation 3 von Fig. 1 im Querschnitt entlang der y-Richtung dargestellt, wobei abweichend bereits ein Werkstück 6 (hier ein Zahnrad) auf der Zwischenhalterung 10 angeordnet ist. Das Werkstück 6 ist um eine vertikale Werkstückachse WA frei drehbar, jedoch radial spielfrei gehalten.

Auf der Lehrradhalterung 11 ist das Lehrrad 12 angeordnet. Das Lehrrad 12 ist in nicht näher dargestellter Weise auf der Welle 22 der Lehrradhalterung 11 fixiert und kann sich daher nur zusammen mit der Welle 22 drehen; die Drehung erfolgt dabei um eine ebenfalls vertikale Lehrradachse LA. Die Welle 22 ist in einem Schlitten 23 gelagert, der innerhalb der Prüfstation 3 horizontal in y-Richtung auf die Zwischenhalterung 10 zu und von dieser weg verfahrbar ist; die Welle 22 ragt durch die langestrecke Öffnung 22a aus dem Gehäuse der Prüfstation 3 heraus. Im Schlitten 23 ist ein motorischer Antrieb 24 ausgebildet, mit dem eine Drehung der Welle 22 angetrieben werden kann. Die absolute Drehposition der Welle 22 bzw. der Lehrradhalterung 11 wird mit dem Drehgeber 16 verfolgt.

Der Schlitten 23 kann mittels einer Schiebeeinrichtung 25, mit der der Schlitten 23 über Federn, hier Schraubenfedern 26, verbunden ist, verfahren werden. Die Schiebeeinrichtung 25 weist ein Innengewinde auf, welches mit einer Gewindestange 27 zusammenwirkt. Durch Drehung der Gewindestange 27 mittels eines motorischen Antriebs 28 kann die Schiebeeinrichtung 25 in y-Richtung verfahren werden. Dabei wird der in der Prüfstation 3 leichtgängig geführte Schlitten 23 über die Schraubenfedern 26 grundsätzlich mitgeführt, sowohl vorwärts (nach rechts auf die Zwischenhalterung 10 zu) als auch rückwärts (nach links). Die absolute Verfahrposition des Schlittens 23 wird über einen Wegaufnehmer 29 mitverfolgt. Man beachte, dass die Gewindestange 27 im Bereich des Schlittens 23 frei durchgeführt ist, um ein dem motorischen Antrieb 28 gegenüber liegendes Lager 27a nutzen zu können.

Alternativ kann der Antrieb des Schlittens 23 auch durch einen Linearmotor erfolgen. Hierbei können die mechanischen Federn durch eine elektronische Steuerung ersetzt werden. Die Steifigkeit bzw. Weichheit der Achse LA kann dann elektronisch geregelt werden.

Für eine Wälzprüfung wird der Schlitten 23 mittels des motorischen Antriebs 28, der Gewindestange 27 und der Schiebeeinrichtung 25 nach rechts verfahren, so dass das Lehrrad 12 mit dem Werkstück 6 in Eingriff kommt. Anschließend wird die Schiebeeinrichtung 25 noch ein wenig weiter nach rechts verfahren, so dass die Schraubenfedern 26 unter Druckspannung geraten. Sodann wird die Schiebeeinrichtung 25 ortsfest gehalten, während das Lehrrad 12 mittels des motiorischen Antriebs 24 und der Welle 22 wenigstens einmal um einen Vollwinkel (360°) gedreht wird. Durch dieses Vorgehen ist sichergestellt, dass das Lehrrad 12 (unter Einwirkung der Schraubenfedern 26) nach links und rechts etwas Bewegungsfreiheit hat, über die das Lehrrad 12 kraftschlüssig am Werkstück 6 während des Abwälzens anliegen kann, auch wenn das Werkstück 6 Aufmaßvariationen über die Drehung zeigt.

**Fig. 3** zeigt in einer Aufsicht das Lehrrad 12 und das Werkstück 6 im Eingriff während der Wälzprüfung. Das Lehrrad 12 wird im gezeigten Beispiel gegen den Uhrzeigersinn gedreht; das Werkstück dreht entsprechend im Uhrzeigersinn.

Der Drehgeber (vgl. Bzz. 16 in Fig. 1 und Fig. 2) der Lehrradhalterung 11 wurde bei der festen Montage des Lehrrads 12 an der Lehrradhalterung 11 so kalibriert, dass ein Kalibrierungspunkt KP, der hier auf der Mitte eines Kalibrierungszahns 30 des Lehrrads 12 liegt, bei einer Winkelposition des Drehgebers 16 von ϕ=0 genau auf der Verbindungslinie VB der Achsen LA und WA liegt, parallel zur positiven y-Richtung. Der Einfachheit halber wird die Winkelposition ϕ des Drehgebers im Folgenden unmittelbar auf die absolute Winkelposition dieses Kalibrierpunkts KP des Lehrrads 12 bezogen, auch wenn der Drehgeber eigentlich die Winkelposition der Lehrradhalterung 11 bestimmt.

In der in Fig. 3 gezeigten Situation liegt gerade eine Winkelposition von etwa ϕ = 30° vor, d.h. der Kalibrierpunkt KP ist (gegen den Uhrzeigersinn, im mathematisch positiven Sinn) um 30° von der Verbindungslinie VB weggeschwenkt.

Während der Wälzprüfung wird in der hier vorgestellten Variante der Erfindung der Abstand der ALW der Lehrradachse LA und der Werkstückachse WA (letztere ist ortsfest) als Funktion der Winkelposition ϕ während der Drehung des Lehrrads 12 (und der entsprechenden, gekoppelten Drehung des Werkstücks 6) bestimmt; es sollten dabei wenigstens so viele Stützpunkte verwendet werden wie Zähne am Werkstück 6 vorhanden sind, bevorzugt werden wenigstens zweimal so viele Stützpunkte verwendet wie Zähne am Werkstück 6 vorhanden sind. Man beachte, dass es für eine einfache Wälzprüfung auch ausreichen würde, den maximalen Abstand ALW über einen Umlauf des Lehrrades 12 zu bestimmen.

Gemäß der Erfindung wird nun auch eine einfache Einmittungs-Information über das Werkstück 6 ermittelt: Ein Orientierungspunkt OP auf dem Werkstück 6, der in der Winkellage ϕ=0 des Lehrrads 12 dem Kalibrierpunkt KP unmittelbar gegenüber auf der Verbindungslinie VB liegen würde, ist gegenüber der positiven y-Richtung um einen Winkel α = 180°- ϕ verschwenkt. Dieser Orientierungspunkt OP liegt (bei der Zwei-Flanken- Anlage von Lehrrad 12 und Werkstück 6, entsprechend der Werkstückgeometrie) in der Mitte einer Orientierungszahnlücke 31 des Werkstücks 6.

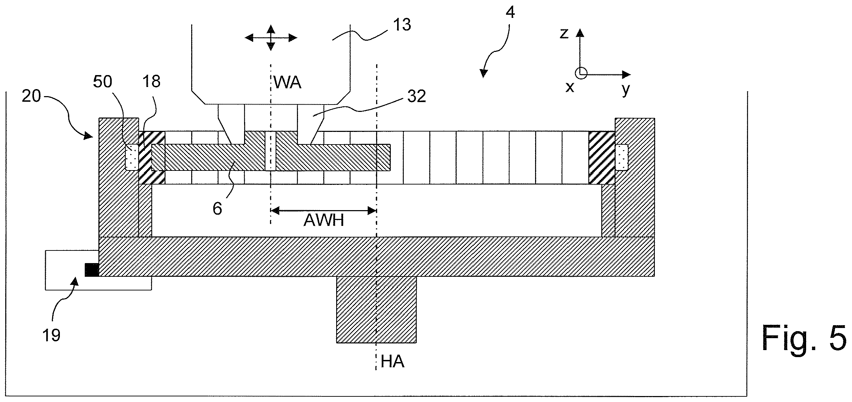

Bevorzugt wird (nach Abschluss der Wälzprüfung) zunächst das Werkstück 6 durch die Werkstückspindel mit Greifbacken 32 ergriffen (siehe dazu auch Fig. 2), und dann wird die Winkelposition ϕ des noch in Eingriff stehenden Lehrrades 12 ausgelesen. Sodann kann das Lehrrad 12 zurückgezogen werden, und das Werkstück 6 kann mit der Werkstückspindel 13 zur Bearbeitungsstation 4 verbracht werden. Bei den Translationsbewegungen der Werkstückspindel 13 tritt keine Veränderung der Winkelposition α des Werkstücks 6 ein (es sei denn die Werkstückspindel 13 würde bereits zu diesem Zeitpunkt in Rotation versetzt, was mit dem Drehgeber 17 der Werkstückspindel 13 verfolgt werden könnte). Das Werkstück 6 kann von der Werkstückspindel 13 anstatt von außen, wie in Fig. 3 oder Fig. 5 dargestellt, auch innen in der Bohrung (vgl. Fig. 2) gegriffen werden. In diesem Fall muss der Aufnahmedorn der Zwischenhalterung 10 der Prüfstation 3 nach unten wegfedern.

Für die nun folgende Honbearbeitung ist damit die Winkelposition α des Orientierungspunktes OP relativ zur positiven y-Richtung bekannt, so dass eine Synchronisation mit der Werkzeugspindel 20 bzw. dem Honring ohne eine gesonderte Einmittung des Werkstücks 6 möglich ist. Insbesondere können alle (Soll-)Zahnflankenpositionen des Werkstücks 6 aus der Position des Orientierungspunktes OP abgeleitet werden.

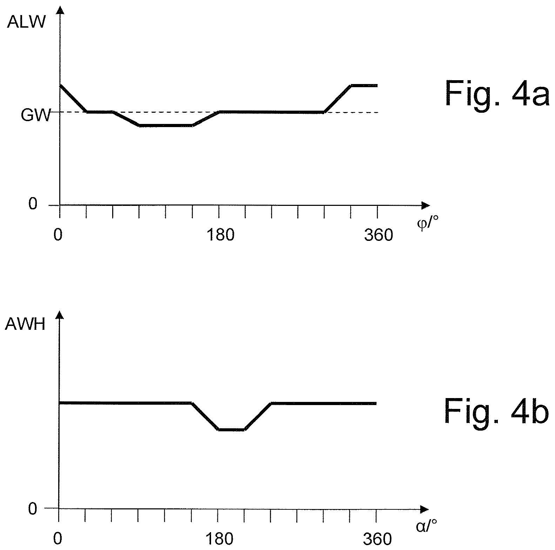

Die Veränderung des Achsabstand ALW von Lehrrad 12 und Werkstück 6, während der Wälzprüfung kann mittels des Wegaufnehmers 29 als Funktion des Drehwinkels ϕ des Lehrrads 12, wie durch den (kalibrierten) Drehgeber 16 bestimmbar ist, ermittelt werden. **Fig. 4a** zeigt beispielhaft das Ergebnis einer solchen Messung.

Im gezeigten Beispiel wurden bei ϕ=0° (=360°) und ϕ=330° Achsabstände ALW festgestellt, die über einem vorgegebenen Grenzwert GW liegen. In der nachfolgenden Honbearbeitung sollen die betroffenen Bereiche des Werkstücks 6 gezielt vorab bearbeitet werden. Die Positionen ϕ=0° und ϕ=330° am Lehrrad 12 entsprechen den Winkelpositionen α= 180° und α= -150°(=210°) am Werkstück.

Im einfachsten Fall wird das Werkstück 6 (ähnlich wie das Werkstück 6 an der Prüfstation 3 relativ zum Lehrrad 12) an der negativen y-Seite mit dem Honwerkzeug 18 in Kontakt gebracht (vgl. dazu **Fig. 5**). Dadurch können identifizierte Winkelpositionen, gemessen in α am Werkstück 6, ohne weitere Umrechnung der Bearbeitung zugewiesen werden, da dann Messort und Bearbeitungsort (bezüglich des Werkstücks 6) übereinstimmen (Im Falle eines anderen Bearbeitungsorts muss ein entsprechender Umrechnungswinkel zu α hinzuaddiert oder subtrahiert werden, etwa wenn eine Werkstückzustellung durch die Werkstückspindel 13 nur in x-Richtung, nicht aber in y-Richtung möglich ist).

Um das zu große Aufmaß bei α= 180° und α= 210° gezielt abzutragen, wird in dieser Erfindungsvariante der Achsabstand AWH von Werkstückspindelachse (bzw. Werkstückachse) WA und Werkzeugspindelachse (bzw. Honwerkzeugachse) HA phasengenau dann verringert, wenn sich das Werkstück 6 zwischen an den Winkelpositionen α= 180° und α= 210° befindet; dadurch findet an diesen Winkelpositionen besonders starker Materialabtrag vom Werkstück 6 statt. An allen anderen Winkelpositionen ist der Achsabstand AWH vergrößert, so dass es an diesen Winkelpositionen zu keinem oder nur einem geringen Materialabtrag kommt. Mit anderen Worten, der Achsabstand AWH wird während (innerhalb) eines Umlaufs der Werkstückspindel 13 durch die elektronische Steuereinrichtung entsprechend den winkelabhängigen Messinformationen über das Werkstück 6 nachgeführt (variiert). Die zugehörige Steuerungsfunktion für den Achsabstand AWH ist in **Fig. 4b** dargestellt.

Nachdem das über dem Grenzwert GW liegende Aufmaß vom Werkstück 6 abgetragen worden ist (was beispielsweise nach einer gewissen Anzahl von Werkstückumdrehungen angenommen wird), wird im dargelegten Beispiel zu einer herkömmlichen Honbearbeitung übergegangen, bei der ein während eines Umlaufs der Werkstückspindel 13 konstanter Achsabstand AWH angewandt wird.

Ebenso wie der Achsabstand AWH kann auch ein Versatz von Honwerkzeug 18 und Werkstückspindel 13 in Umfangsrichtung angewandt werden; mit anderen Worten ein Zahn des Werkstücks 6 taucht dann etwas abweichend von einer mittigen Position in eine Zahnlücke des Honwerkzeugs 18 ein. Zur Einstellung eines Versatzes, also der relativen Drehposition von Werkstück 6 und Honwerkzeug 18, kann die Drehgeschwindigkeit der Werkstückspindel 13 und/oder der Werkzeugspindel 20 verändert werden, typischerweise wobei kurze Beschleunigungs- und Bremspulse angewandt werden.

Fig. 5 zeigt das Werkstück 6, welches an der Werkstückspindel 13 gehalten ist und von dieser um die Werkstückspindelachse (bzw. Werkstückachse) WA rotiert wird (wobei die Winkelposition α des Werkstück 6 verändert wird), im Eingriff mit dem Honwerkzeug 18, welches mittels eines hydraulischen Dehnelements 50 in der Werkzeugspindel 20 eingespannt ist und von dieser um die Werkzeugspindelachse (bzw. Honwerkzeugachse) AH rotiert wird (wodurch die Winkelposition β des Honwerkzeugs 18 verändert wird). Durch Verfahren der Werkstückspindel 13 horizontal in y-Richtung kann der Achsabstand AWH zwischen den Achsen WA und HA eingestellt werden. Um den Achsabstand AWH sehr schnell zu verändern, insbesondere während (innerhalb) eines Umlaufs des Werkstücks 6 auch bei hoher Drehzahl des Werkstücks 6 (etwa 5000 U/min und mehr), können insbesondere piezoelektrische Positionierelemente eingesetzt werden (nicht näher dargestellt).

## Patentansprüche

1. Verfahren zur Honbearbeitung eines Werkstücks (6), insbesondere Zahnrads,
mit folgenden Schritten:
a) das Werkstück (6) wird zunächst auf eine Zwischenhalterung (10) verbracht,
b) das Werkstück (6) wird von der Zwischenhalterung (10) mit einer definierten Winkelposition (α) an eine Werkstückspindel (13) übergeben, und
c) das auf der Werkstückspindel (13) gehaltene Werkstück (6) wird mit einem Honwerkzeug (18) auf einer Werkzeugspindel (20) in Eingriff gebracht und einer Honbearbeitung unterzogen,
**dadurch gekennzeichnet,**
**dass** nach Schritt a) das Werkstück (6) auf der Zwischenhalterung (10) mit einem Lehrrad (12) auf einer Lehrradhalterung (11) in Eingriff gebracht und an diesem abgewälzt wird, um das Werkstück (6) zu vermessen, und anhand des Ergebnisses der Vermessung des Werkstücks (6) nach Schritt a) entschieden wird, ob das Werkstück (6) für die Honbearbeitung in Schritt c) zugelassen oder aussortiert wird, wobei ein aussortiertes Werkstück (6) von einem Greifer (7) von der Zwischenhalterung (10) direkt zurück zu einer Be- und Entladestation (2) verbracht wird;
und **dass** vor oder während Schritt b) eine Übergabe-Winkelposition (α) des Werkstücks (6) durch Auslesen eines Drehgebers (16) der Lehrradhalterung (11) bestimmt wird.

2. Verfahren nach Anspruch 1, **dadurch gekennzeichnet, dass** die Winkelposition (ϕ) der Lehrradhalterung (11) mit dem Drehgeber (16) ausgelesen wird, während das Lehrrad (12) noch im Eingriff mit dem Werkstück (6) ist, aber das Werkstück (6) im Rahmen der Übergabe bereits drehfest ergriffen worden ist.

3. Verfahren nach einem der vorhergehenden Ansprüche, **dadurch gekennzeichnet, dass** in Schritt b) die Übergabe von der Zwischenhalterung (10) direkt an die Werkstückspindel (13) erfolgt, insbesondere wobei die Werkstückspindel (13) bei der Übergabe motorisch verfahren wird.

4. Verfahren nach einem der vorhergehenden Ansprüche, **dadurch gekennzeichnet, dass** ein Werkstück (6) nach Schritt a) nach der Vermessung aussortiert wird, wenn das maximale Aufmaß des Werkstücks (6) einen Grenzwert überschreitet.

5. Verfahren nach einem der vorhergehenden Ansprüche, **dadurch gekennzeichnet, dass** im Rahmen der Vermessung des Werkstücks (6) winkelabhängige Maßinformationen über das Werkstück (6) bestimmt werden, wobei beim Abwälzen mittels des Drehgebers (16) der Lehrradhalterung (11) die Winkelposition (α) des Werkstücks (6) mitverfolgt wird.

6. Verfahren nach Anspruch 5, **dadurch gekennzeichnet, dass** die winkelabhängigen Maßinformationen an eine elektronische Steuereinrichtung (21), die in Schritt c) die Honbearbeitung steuert, übergeben werden,
und dass die elektronische Steuereinrichtung (21) die winkelabhängigen Maßinformationen für die Steuerung der Honbearbeitung des Werkstücks (6) in Schritt c) auswertet.

7. Verfahren nach Anspruch 6, **dadurch gekennzeichnet, dass** in Schritt c) der relative Achsabstand (AWH) und/oder die relative Drehposition des Werkstücks (6) an der Werkstückspindel (13) und des Honwerkzeugs (18) an der Werkzeugspindel (20) während eines Umlaufs des Werkstücks (6) in Abhängigkeit von den winkelabhängigen Maßinformationen mittels der elektronischen Steuereinrichtung (21) nachgeführt werden.

8. Verfahren nach einem der vorhergehenden Ansprüche, **dadurch gekennzeichnet, dass** das Werkstück (6) auf der Zwischenhalterung (10) frei drehbar gehalten ist, und das Lehrrad (12) beim Abwälzen für die Vermessung des Werkstücks (6) motorisch angetrieben wird.

9. Verfahren nach einem der vorhergehenden Ansprüche, **dadurch gekennzeichnet, dass** die Schritte a) bis c) an verschiedenen Werkstücken (6) wiederholt werden, und dass zumindest bei einem Teil der Werkstücke (6) nach der Honbearbeitung
d) das Werkstück (6) zurück auf die Zwischenhalterung (10) verbracht wird, erneut mit dem Lehrrad (12) in Eingriff gebracht und an diesem abgewälzt wird, um das Werkstück (6) zu vermessen, und
e) in Abhängigkeit vom Ergebnis der Messung von Schritt d) entweder ein weiteres Werkstück (6) gemäß den Schritten a) bis c) einer Honbearbeitung unterzogen wird, oder das Honwerkzeug (18) ausgetauscht wird.

10. Honmaschine (1) eingerichtet zur Durchführung eines Verfahrens nach einem der vorhergehenden Ansprüche, umfassend
- eine Werkstückspindel (13) für ein Werkstück (6), insbesondere ein Zahnrad,
- eine Werkzeugspindel (20) für ein Honwerkzeug (18), insbesondere einen keramischen oder keramikbeschichteten Honring,
- eine Be- und Entladestation für Werkstücke, **gekennzeichnet durch**
- eine Prüfstation (3), an welcher eine Zwischenhalterung (10) für das Werkstück (6) und eine Lehrradhalterung (11) für ein Lehrrad (12) ausgebildet sind, wobei die Lehrradhalterung (11) mit einem Drehgeber (16) zur Bestimmung der Winkelposition (ϕ) der Lehrradhalterung (11) ausgestattet ist, und
- einen Greifer (7), der zwischen der Prüfstation (3) und der Be- und Entladestation (2) verfahrbar ist.

11. Honmaschine (1) nach Anspruch 10, **dadurch gekennzeichnet,**
**dass** die Honmaschine (1) eine elektronische Steuereinrichtung (21) aufweist, die dazu ausgebildet ist, durch Auslesen des Drehgebers (16) eine der ausgelesenen Winkelposition (ϕ) der Lehrradhalterung (11) zugehörige Winkelposition (α) des Werkstücks (6) zu ermitteln und nach Übergabe des Werkstücks (6) an die Werkstückspindel (13) damit die Winkelposition (α) des Werkstücks (6) während der Honbearbeitung nachzuverfolgen.

12. Honmaschine (1) nach Anspruch 11, **dadurch gekennzeichnet, dass** die elektronische Steuereinrichtung weiterhin dazu ausgebildet ist,
- aus den relativen Verschiebepositionen (ALW) von Zwischenhalterung (10) und Lehrradhalterung (11) sowie der Winkelpositionen (ϕ) der Lehrradhalterung (11) während eines Abwälzens des Werkstücks (6) am Lehrrad (12) winkelabhängige Maßinformationen über das Werkstück (6) einzulesen, und
- bei der Honbearbeitung des Werkstücks (6) den relativen Achsabstand (AWH) und/oder die relative Drehposition des Werkstücks (6) auf der Werkstückspindel (13) und eines Honwerkzeug (18) auf der Werkzeugspindel (20) während eines Umlaufs des Werkstücks (6) in Abhängigkeit von den winkelabhängigen Maßinformationen nachzuführen.

## Claims

1. Method for the honing processing of a workpiece (6), in particular a toothed wheel,
having the following steps:
a) the workpiece (6) is first moved to an intermediate retention member (10),
b) the workpiece (6) is transferred from the intermediate retention member (10) with a defined angular position (α) to a workpiece spindle (13), and
c) the workpiece (6) which is retained on the workpiece spindle (13) is brought into engagement with a honing tool (18) on a tool spindle (20) and subjected to a honing processing operation,
**characterised in that**
after step a) the workpiece (6) on the intermediate retention member (10) is brought into engagement with a master wheel (12) on a master wheel retention member (11) and is rolled thereon in order to measure the workpiece (6) and, using the result of the measurement of the workpiece (6), it is decided after step a) whether the workpiece (6) is accepted for the honing processing operation in step c) or rejected,
wherein a rejected workpiece (6) is moved by a gripper (7) from the intermediate retention member (10) directly back to a loading and unloading station (2);
and **in that** before or during step b) a transfer angular position (α) of the workpiece (6) is determined by reading a rotary encoder (16) of the master wheel retention member (11).

2. Method according to claim 1, **characterised in that** the angular position (ϕ) of the master wheel retention member (11) is read using the rotary encoder (16), whilst the master wheel (12) is still in engagement with the workpiece (6), but the workpiece (6) in the context of the transfer has already been gripped in a rotationally secure manner.

3. Method according to anyone of the preceding claims,
**characterised in that** in step b) the transfer from the intermediate member (10) is carried out directly to the workpiece spindle (13), in particular wherein the workpiece spindle (13) is driven in a motorised manner during the transfer.

4. Method according to any one of the preceding claims,
**characterised in that** a workpiece (6) is rejected after step a) after the measurement if the maximum overmeasure of the workpiece (6) exceeds a limit value.

5. Method according to any one of the preceding claims,
**characterised in that**, in the context of the measurement of the workpiece (6), angle-dependent dimension information relating to the workpiece (6) is determined, wherein during the rolling operation using the rotary encoder (16) of the master wheel retention member (11) the angular position (α) of the workpiece (6) is monitored.

6. Method according to claim 5, **characterised in that** the angle-dependent dimension information is transmitted to an electronic control device (21) which controls the honing processing operation in step c),
and **in that** the electronic control device (21) evaluates the angle-dependent dimension information for the control of the honing processing operation of the workpiece (6) in step c).

7. Method according to claim 6, **characterised in that** in step c) the relative axial spacing (AWH) and/or the relative rotational position of the workpiece (6) on the workpiece spindle (13) and the honing tool (18) on the tool spindle (20) during a rotation of the workpiece (6) are tracked in accordance with the angle-dependent dimension information using the electronic control device (21).

8. Method according to any one of the preceding claims, **characterised in that** the workpiece (6) is retained in a freely rotatable manner on the intermediate retention member (10), and the master wheel (12) during the rolling operation is driven in a motorised manner for the measurement of the workpiece (6).

9. Method according to any one of the preceding claims, **characterised in that** the steps a) to c) are repeated on different workpieces (6), and **in that** at least with some of the workpieces (6) after the honing processing operation, d) the workpiece (6) is moved back onto the intermediate retention member (10), brought into engagement with the master wheel (12) again and rolled thereon in order to measure the workpiece (6), and
e) depending on the result of the measurement of step d) either another workpiece (6) is subjected to a honing processing operation according to steps a) to c) or the honing tool (18) is replaced.

10. Honing machine (1) configured to carry out a method according to any one of the preceding claims, comprising
- a workpiece spindle (13) for a workpiece (6), in particular a toothed wheel,
- a tool spindle (20) for a honing tool (18), in particular a ceramic or ceramic-coated honing ring,
- a loading and unloading station for workpieces, **characterised by**
- a test station (3), on which an intermediate retention member (10) for the workpiece (6) and a master wheel retention member (11) for a master wheel (12) are formed, wherein the master wheel retention member (11) is provided with a rotary encoder (16) for determining the angular position (ϕ) of the master wheel retention member (11), and
- a gripper (7) which can be moved between the test station (3) and the loading and unloading station (2).

11. Honing machine (1) according to claim 10, **characterised in that** the honing machine (1) has an electronic control device (21) which is configured to establish by reading the rotary encoder (16) an angular position (α) of the workpiece (6) which is associated with the read angular position (ϕ) of the master wheel retention member (11) and after transferring the workpiece (6) to the workpiece spindle (13) to monitor the angular position (α) of the workpiece (6) during the honing processing operation therewith.

12. Honing machine (1) according to claim 11, **characterised in that** the electronic control device is further configured
- to input angle-dependent dimension information relating to the workpiece (6) from the relative displacement positions (ALW) of the intermediate retention member (10) and master wheel retention member (11) and from the angular positions (ϕ) of the master wheel retention member (11) during a rolling operation of the workpiece (6) on the master wheel (12), and
- during the honing processing operation of the workpiece (6) to track the relative axial spacing (AWH) and/or the relative rotational position of the workpiece (6) on the workpiece spindle (13) and of a honing tool (18) on the tool spindle (20) during a rotation of the workpiece (6) in accordance with the angle-dependent dimension information.

## Revendications

1. Procédé de rodage d'une pièce (6) à usiner, en particulier d'une roue dentée,
incluant les étapes suivantes :
a) la pièce (6) est tout d'abord déposée sur un support intermédiaire (10),
b) ladite pièce (6) est transférée à une broche (13) porte-pièces à partir dudit support intermédiaire (10), en occupant une position angulaire (α) bien définie,
et
c) ladite pièce (6), retenue sur ladite broche (13) porte-pièces, est mise en prise avec un outil de rodage (18), sur une broche (20) porte-outils, puis soumise à un rodage, **caractérisé par le fait**
**qu'**à l'issue de l'étape a), la pièce (6) est mise en prise, sur le support intermédiaire (10), avec une roue de calibrage (12) située sur un support (11) de ladite roue, puis est mise en défilement contre cette dernière afin de mesurer ladite pièce (6) et, à l'issue de l'étape a), sur la base du résultat de la mesure de ladite pièce (6), il est décidé si ladite pièce (6) est admise en vue du rodage à l'étape c), ou bien rejetée, une pièce (6) rejetée étant alors directement renvoyée à un poste (2) de chargement et de déchargement, par un organe de préhension (7), à partir du support intermédiaire (10) ;
et **que**, avant ou pendant l'étape b), une position angulaire (α) de transfert de ladite pièce (6) est déterminée par lecture d'un codeur rotatif (16) du support (11) de ladite roue de calibrage.

2. Procédé selon la revendication 1, **caractérisé par le fait que** la position angulaire (ϕ) du support (11) de la roue de calibrage est lue par le codeur rotatif (16) alors même que ladite roue de calibrage (12) demeure en prise avec la pièce (6), mais que ladite pièce (6) a déjà été saisie, avec verrouillage rotatif, dans le cadre du transfert.

3. Procédé selon l'une des revendications précédentes, **caractérisé par le fait que** le transfert à la broche (13) porte-pièces, à partir du support intermédiaire (10), s'opère en mode direct à l'étape b), sachant notamment que ladite broche (13) porte-pièces est déplacée par moteur au stade du transfert.

4. Procédé selon l'une des revendications précédentes, **caractérisé par le fait qu'**une pièce (6) est rejetée après la mesure, à l'issue de l'étape a), lorsque la cote maximale de ladite pièce (6) excède une valeur limite.

5. Procédé selon l'une des revendications précédentes, **caractérisé par le fait que** des informations dimensionnelles à dépendance angulaire, relatives à la pièce (6), sont déterminées dans le cadre de la mesure de ladite pièce (6), sachant que la position angulaire (α) de ladite pièce (6) est suivie, au stade de la mise en défilement, au moyen du codeur rotatif (16) du support (11) de la roue de calibrage.

6. Procédé selon la revendication 5, **caractérisé par le fait que** les informations dimensionnelles, à dépendance angulaire, sont transférées à un dispositif de commande électronique (21) pilotant le rodage à l'étape c) ;
et que ledit dispositif de commande électronique (21) évalue lesdites informations dimensionnelles à dépendance angulaire, en vue de piloter le rodage de la pièce (6) à ladite étape c).

7. Procédé selon la revendication 6, **caractérisé par le fait que** la distance relative entre axes (AWH) et/ou la position relative que la pièce (6) a prise par rotation sur la broche (13) porte-pièces, et que l'outil de rodage (18) a prise par rotation sur la broche (20) porte-outils, est (sont) réajustée(s) au moyen du dispositif de commande électronique (21), lors d'un tour complet de ladite pièce (6), en fonction des informations dimensionnelles à dépendance angulaire.

8. Procédé selon l'une des revendications précédentes, **caractérisé par le fait que** la pièce (6) est retenue sur le support intermédiaire (10) avec faculté de rotation libre, et la roue de calibrage (12) est entraînée par moteur, au cours de la mise en défilement, en vue de mesurer ladite pièce (6).

9. Procédé selon l'une des revendications précédentes, **caractérisé par le fait que** les étapes a) à c) sont réitérées sur différentes pièces (6) à usiner ; et qu'à l'issue du rodage, concernant au moins une partie desdites pièces (6),
d) la pièce (6) est remise en place sur le support intermédiaire (10), de nouveau mise en prise avec la roue de calibrage (12), puis mise en défilement contre cette dernière en vue de mesurer ladite pièce (6) et,
e) en fonction du résultat de la mesure effectuée à l'étape d), soit une pièce supplémentaire (6) est soumise à un rodage conformément auxdites étapes a) à c), soit l'outil de rodage (18) est remplacé.

10. Rodeuse (1) agencée pour la mise en oeuvre d'un procédé conforme à l'une des revendications précédentes, comprenant
- une broche (13) porte-pièces dédiée à une pièce (6) à usiner, en particulier à une roue dentée,
- une broche (20) porte-outils dévolue à un outil de rodage (18), en particulier à une bague de rodage en céramique ou à revêtement céramique,
- un poste de chargement et de déchargement affecté à des pièces, **caractérisée par**
- un poste de contrôle (3), auquel sont ménagés un support intermédiaire (10) destiné à la pièce (6) et un support (11) destiné à une roue de calibrage (12), le support (11) de la roue de calibrage étant équipé d'un codeur rotatif (16), en vue de déterminer la position angulaire (ϕ) dudit support (11) de la roue de calibrage, et
- un organe de préhension (7), pouvant être déplacé entre ledit poste de contrôle (3) et le poste (2) de chargement et de déchargement.

11. Rodeuse (1) selon la revendication 10, **caractérisée par le fait que** ladite rodeuse (1) comporte un dispositif de commande électronique (21) réalisé en vue de spécifier, par lecture du codeur rotatif (16), une position angulaire (α) de la pièce (6) associée à la position angulaire lue (ϕ) du support (11) de la roue de calibrage, et de suivre ainsi, après transfert de ladite pièce (6) à la broche (13) porte-pièces, la position angulaire (α) occupée par ladite pièce (6) au cours du rodage.

12. Rodeuse (1) selon la revendication 11, **caractérisée par le fait que** le dispositif de commande électronique est réalisé, par ailleurs, en vue
- d'importer des informations dimensionnelles à dépendance angulaire, relatives à la pièce (6), sur la base des positions relatives (ALW) que le support intermédiaire (10) et le support (11) de la roue de calibrage ont prises par déplacement, ainsi que des positions angulaires (ϕ) dudit support (11) de la roue de calibrage au cours d'un défilement de ladite pièce (6) contre ladite roue de calibrage (12), et
- de réajuster, au cours du rodage de la pièce (6), la distance relative entre axes (AWH) et/ou la position relative que ladite pièce (6) a prise par rotation sur la broche (13) porte-pièces, et qu'un outil de rodage (18) a prise par rotation sur la broche (20) porte-outils, lors d'un tour complet de ladite pièce (6), en fonction desdites informations dimensionnelles à dépendance angulaire.
